# FASCICULE DE BREVET EUROPEEN

(11) **EP 2 889 855 B1**
(45) Date de publication et mention de la délivrance du brevet: **08.01.2020**
(21) Numéro de dépôt: 14199603.3
(22) Date de dépôt: 22.12.2014
(51) Int. Cl.: G09C 1/10, G06F 21/72, H04L 9/16, G06F 15/78, G06F 21/74

(54) **Procédé de conception d'une architecture reconfigurable de traitement d'un ensemble d'opérations multi-niveau de sécurité**
Verfahren zum Erstellen einer rekonfigurierbaren Verarbeitungsarchitektur einer Reihe von mehrstufigen Sicherheitsoperationen
Method for designing a reconfigurable architecture for processing a set of multi-level security operations

(30) Priorité: 26.12.2013 FR 1303087
(43) Date de publication de la demande: 01.07.2015
(73) Titulaire: Thales, 92200 Neuilly Sur Seine (FR)
(72) Inventeur: Saliba, Eric, 92622 GENNEVILLIERS (FR); Dicklic, Laurent, 92622 GENNEVILLIERS (FR); Grisal, Olivier, 92622 GENNEVILLIERS (FR)
(74) Mandataire: Lavoix

(56) Documents cités:
- US-A1- 2004 123 119
- US-A1- 2010 027 782
- US-A1- 2012 036 581
- US-B1- 6 408 074
- HUANG C H ET AL: "UML-based hardware/software co-design platform for dynamically partially reconfigurable network security systems", JOURNAL OF SYSTEMS ARCHITECTURE, ELSEVIER BV, NL, vol. 56, no. 2-3, 1 février 2010 (2010-02-01), pages 88-102, XP026944461, ISSN: 1383-7621, DOI: 10.1016/J.SYSARC.2009.11.007 [extrait le 2009-12-03]

## Description

La présente invention concerne un procédé de conception d'une architecture de traitement d'un ensemble d'opérations à effectuer sur des données. La présente invention se rapporte également à un programme d'ordinateur adapté pour la mise en oeuvre d'un tel procédé et à une architecture de traitement d'un ensemble d'opérations.

De manière générale, l'invention se situe dans le domaine du traitement de données sécurisées requérant des niveaux de protection distincts par une architecture de traitement. Formulée de manière générale, la problématique associée à ce domaine est de garantir l'intégrité, l'authenticité, le cloisonnement ainsi que la maîtrise des traitements d'opérations appliquées à des données requérant des niveaux de protection différents au sein d'un même système.

Répondre à cette problématique impose des contraintes à l'architecture de traitements des opérations appliquées aux données. Ces contraintes varient notamment en fonction de la nature des traitements considérés. Notamment, par exemple, les opérations sont des opérations en coupure, en ressource et en gestion de clé ou de paramètres cryptographiques. Les contraintes dépendent aussi du niveau de protection requis par les données. De plus, les contraintes dépendent aussi du niveau de protection requis par les opérations.

Il est donc souhaitable que l'architecture de traitement permette de garantir que lorsque chaque opération est effectuée, le niveau de protection soit suffisant par rapport aux différentes contraintes mentionnées précédemment.

Le document US 2004/123119 A1 décrit des procédés et appareils prévus pour le découplage d'une interface d'accélérateur de cryptographie de cœur de traitement cryptographique. Une ressource partagée fournit à l'interface d'accélérateur de cryptographie, la ressource comportant plusieurs ports d'entrée. Les références aux données dans la ressource partagée sont prévues pour permettre le traitement et la commande de données en vue de son traitement par des noyaux de traitement cryptographique sans un nombre substantiel de tampon séparé dans les chemins de données de traitement de cryptographie.

Le document US 6 408 074 B1 décrit un dispositif de chiffrement qui peut être configuré pour exécuter différents types d'algorithmes cryptographiques et effectuer plus d'un algorithme simultanément. Le dispositif est actionné par une source externe et est mis en oeuvre avec une architecture matérielle qui présente l'efficacité des dispositifs de chiffrement classiques à base de matériels, ainsi que la souplesse des solutions à base de logiciels.

Le document US 2010/027782 A1 décrit un dispositif de flux de données de traitement dans une unité de communication avec deux régions mutuellement séparées pour le traitement de l'information qui fournissent au moins deux chemins de messages distincts. Les chemins de messages sont reliés respectivement à un message émetteur et à un récepteur de messages dans lequel, pour chaque chemin de message, un module de codage est prévu qui est relié à la fois à une première région de traitement des données et également à une deuxième région de traitement de données. En outre, dans la seconde région de traitement de données, une unité de distribution est prévue qui est reliée aux chemins de message de la première région de traitement de données et à tous les modules de codage des chemins de données correspondant afin de distribuer des messages donnés de manière ciblée.

Le document US 2012/036 581 A1 décrit un équipement de sécurité positionné entre au moins un domaine ayant un niveau de confiance ou un niveau de sensibilité A et au moins un domaine ayant un niveau de confiance ou de sensibilité B, sachant que le niveau A est différent du niveau B. L'équipement comporte au moins les éléments suivants : une couche logicielle de virtualisation V implémentée sur la couche physique H et disposée entre ladite couche physique H et au moins un ensemble constitué d'au moins trois blocs compartimentés différents et présentant des niveaux de sensibilité différents, BLA, BLB, MDS, lesdits blocs compartimentés reposant sur la couche physique H et la couche de virtualisation et lesdits blocs étant constitués d'au moins un des éléments pris parmi la liste suivante :
- un bloc réseau A, BLA, comportant l'ensemble des fonctions réseau permettant de traiter les données de niveau de sécurité A,
- un bloc réseau B, BLB, comportant l'ensemble des fonctions réseau permettant de traiter les données de niveau de sécurité B,
- un bloc module de sécurité, MDS, ou SAS disposé entre au moins un bloc de type BLA et au moins un bloc de type BLB, ledit module de sécurité étant adapté à contrôler les échanges de données entre lesdits blocs BLA et BLB, ledit module de sécurité comportant l'ensemble des transformations de sécurité, de filtrage ou de fonctions cryptographiques.

En outre, les documents US-A-6 026 490, US-A-6 101 255, US-A-6 845 446, US-A-7 200 229 et US-A-7 444 565 proposent des architectures de traitement présentant des ressources programmables comme des structures de type ASIC. Une structure de type ASIC (ASIC est l'acronyme anglais de « Application-Specific Integrated Circuit » pour « circuit intégré propre à une application ») est un circuit intégré dédié à une application particulière.

Toutefois, pour chacune de ces architectures proposées, la reconfigurabilité associée est faible.

Il existe donc un besoin pour un procédé permettant de concevoir une architecture de traitement propre à traiter des données et présentant une reconfigurabilité accrue tout en garantissant le niveau de protection requis pour les données que l'architecture est propre à traiter.

Selon l'invention, ce but est atteint par un procédé de conception d'une architecture de traitement d'un ensemble d'opérations effectuées sur des données, certaines données requérant un niveau de protection, l'ensemble des opérations effectuées sur des données requérant un niveau de protection supérieur à un niveau de protection seuil comportant au moins deux sous-ensembles d'opérations réalisables en parallèle. Le procédé comprend une étape de détermination des différents sous-ensembles d'opérations de l'ensemble des opérations, chaque sous-ensemble comprenant des opérations à effectuer sur des données requérant un niveau de protection supérieur à un niveau de protection seuil et chaque sous-ensemble d'opérations étant réalisable en parallèle des autres sous-ensembles d'opérations. Le procédé comporte aussi une étape de détermination, pour chaque sous-ensemble d'opérations, du niveau de protection le plus élevé requis par les données sur lesquelles les opérations du sous-ensemble sont effectuées, et une étape de génération, pour chaque sous-ensemble d'opérations, d'un bloc de traitement dans l'architecture de traitement à concevoir, le bloc de traitement comprenant un sous-bloc de calcul dédié uniquement à l'exécution des opérations du sous-ensemble sur des données à traiter par le bloc de traitement dont le niveau de protection dépend du niveau de protection déterminé pour le sous-ensemble d'opérations considéré et un sous-bloc de protection propre à assurer la protection des données à traiter par le bloc de traitement. Le procédé comprend également une étape de génération d'au moins un aiguilleur propre à acheminer, vers chaque bloc de traitement, les données à traiter, dans lequel le procédé comprend, en outre, une étape de :
- détermination des opérations à effectuer sur des données dont le niveau de protection est inférieur au niveau de protection seuil, et
- génération, pour chacune des opérations déterminées, d'une unité de traitement de l'opération, les unités de traitement étant distinctes des blocs de traitement,
- détermination parmi les opérations effectuées sur des données dont le niveau de protection est inférieur au niveau de protection seuil, des opérations redondantes, et
- élimination pour les opérations redondantes déterminées, d'une des deux opérations redondantes.

Suivant des modes de réalisation particuliers, le procédé comprend une ou plusieurs des caractéristiques suivantes, prise(s) isolément ou suivant toutes les combinaisons techniquement possibles :
- chaque bloc de traitement est propre à protéger des données dont le niveau de protection est égal au niveau de protection déterminé pour le sous-ensemble d'opérations pour lequel le bloc de traitement est généré.
- le procédé comprend, en outre, une étape de détermination des données à traiter par le bloc de traitement provenant d'une unité de traitement.
- chaque sous-bloc de calcul est propre à obtenir des données traitées par exécution des opérations du sous-ensemble sur les données à traiter par le bloc de traitement, le procédé comprenant, en outre, une étape de détermination des données à acheminer vers une ou plusieurs unités de traitement parmi les données traitées par chaque sous-bloc de calcul et une étape de génération d'au moins un aiguilleur des données propre à acheminer les données déterminées vers le ou les unités de traitement.
- le procédé est mis en oeuvre par ordinateur.

L'invention concerne aussi un produit programme d'ordinateur comportant des instructions de code de programmation aptes à être mises en œuvre par un processeur, le processeur étant apte à mettre en œuvre le procédé tel que précédemment décrit.

En outre, l'invention se rapporte aussi à une architecture de traitement obtenue par la mise en œuvre du procédé tel que précédemment décrit.

D'autres caractéristiques et avantages de l'invention apparaîtront à la lecture de la description qui suit, de modes de réalisation de l'invention, donnée à titre d'exemple uniquement et en références aux dessins qui sont :
- figure 1, une vue schématique d'une architecture 10 à concevoir,
- figure 2, un ordinogramme de l'exemple de procédé de conception selon la figure 1, et
- figure 3, une vue schématique d'un exemple d'architecture obtenue par la mise en œuvre du procédé de la figure 2.

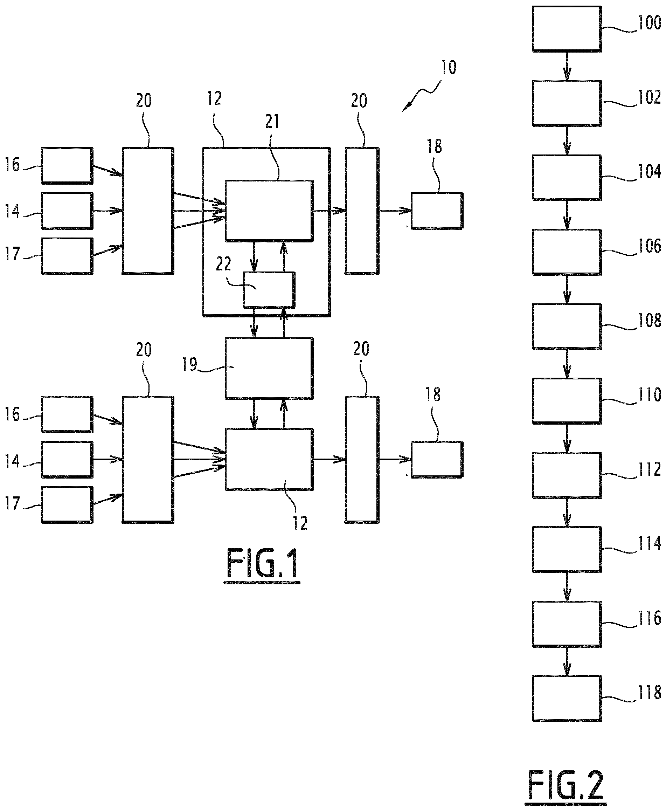

La figure 1 représente une architecture 10 à concevoir présentant deux briques élémentaires 12 aussi appelées blocs de traitement, des éléments d'entrée 14, 16 et 17 fournis aux deux briques élémentaires, les résultats 18 obtenus après utilisation de chaque brique élémentaire 12, une brique de service générique 19 et des aiguilleurs 20.

L'architecture de traitement à concevoir est propre à effectuer des opérations sur des données. Par exemple, l'architecture de traitement est un automate pour des opérations bancaires permettant des transactions financières ou encore des opérations de chiffrement de type protection de communication ou de transmission sur des réseaux.

A titre d'exemple, seule la première brique élémentaire 10 est détaillée dans ce qui suit, étant entendu que la deuxième brique élémentaire 10 présente une structure analogue à la première brique élémentaire 10.

La première brique élémentaire 10 comporte un sous-bloc de calcul 21 et un sous-bloc de protection locale 22. A titre d'exemple, le sous-bloc de calcul 21 est une partie d'un FPGA, d'un ASIC ou d'une architecture programmable.

Le sous-bloc de calcul 21 correspond typiquement à une implémentation assurant des traitements cryptographiques sur les données en entrée. Les éléments en entrée du sous-bloc de calcul 21 correspondent d'une part aux données traitées sur lesquels le sous-bloc de calcul 21 réalise des opérations et des éléments correspondant à des données et des paramètres permettant la configuration des opérations que le sous-bloc de calcul 21 réalise.

Le sous-bloc de calcul 21 assure des opérations sur les données traitées et sur les données et paramètres de configuration en entrée avec ou sans résultat 18 et avec ou sans appel à la brique de services génériques 19 via le sous-bloc de protection locale 22.

Les premiers éléments d'entrées 14 sont les données à traiter par le sous-bloc de calcul 21. Les opérations réalisées par le sous-bloc de calcul 21 visent en priorité les premiers éléments d'entrée 14.

Les données requièrent un niveau de protection différent selon les données considérées. Typiquement, certaines données sont des données requérant un niveau de protection faible voire nul alors que d'autres données sont des données critiques requérant un niveau de protection très élevé. A titre d'exemple, des montants de transaction bancaire, la vérification des codes porteur sont des données impliquant un niveau de protection non nul.

De manière générale, le niveau de protection d'une donnée dépend des contraintes liées aux domaines d'application qui définissent des règles en fonction des niveaux des sensibilités visées (par exemple cadre réglementaire pour les utilisations défense ou gouvernementale, contraintes bancaires...).

Dans la suite, à titre de simplification, le niveau de protection sera représenté par un nombre, un nombre plus élevé correspondant à un niveau de protection plus élevé.

Les deuxièmes éléments d'entrées 16 sont les données traitantes comme des clés cryptographiques ou des valeurs de référence (mot de passe ou code) qui permettent la configuration des différentes opérations susceptibles d'être effectuées sur les données d'entrée. Par exemple, dans le cas de l'automate pour des opérations bancaires, les opérations sont le chiffrement, la vérification d'intégrité ou d'authenticité d'un montant de transaction ou d'une compensation bancaire. Certaines opérations sont effectuées de manière systématique tandis que d'autres opérations dépendent du souhait de l'utilisateur de l'automate.

Les troisièmes éléments d'entrées 17 sont la totalité ou une partie de l'implémentation des opérations du bloc de traitement 12. Ces éléments correspondent par exemple au masque, au flux de bits FPGA ou au fichier de configuration du bloc de traitement 12 contenant l'ensemble ou une partie des opérations que le bloc réalise.

La brique élémentaire 10 assure la protection en intégrité et en confidentialité de l'ensemble des opérations que le sous-bloc de calcul 21 réalise. La brique élémentaire 10 assure la protection de l'ensemble des éléments en entrée depuis leur entrée, jusqu'à leur effacement. La brique élémentaire 10 assure également le cloisonnement des traitements et des données vis-à-vis d'autres briques élémentaires de niveau différents.

Le sous-bloc de protection locale 22 de la première brique élémentaire 10 assure une désensibilisation des données traitées avant envoi vers la brique de services génériques 19.

La brique de services génériques 19 peut être mutualisée pour un ensemble de briques élémentaires 10 de niveaux de sensibilité différents connectés via lors protection locale. Ces services génériques manipulent des données non sensibles (par exemple de niveau de sécurité le plus faible) et correspondent par exemple à un service de stockage.

Chaque brique élémentaire 10 est ainsi propre à exporter ou importer des données 'non sensibles' issues de la brique de services génériques 19 (par exemple par mémorisation) via son sous-bloc de protection locale 22.

Le sous-bloc de protection locale 22 met ainsi en œuvre un ensemble d'opérations dites de 'protection locale' qui garantissent la protection par le bloc de traitement 12 en intégrité et en confidentialité des éléments en entrée.

Cette protection locale est du niveau approprié et peut être configurée via les éléments d'entrée 16 et 17.

A partir des éléments d'entrées 14, 16 et 17, la brique élémentaire 10 est propre à effectuer sur les données des opérations avec le niveau de protection approprié. La brique élémentaire 10 est ainsi propre à obtenir les données à calculer avec le niveau de protection approprié. L'ensemble de ces données est le résultat 18.

Pour concevoir l'architecture de traitement entièrement, plusieurs briques élémentaires 10 sont impliquées.

Il convient donc d'utiliser les aiguilleurs 20 pour acheminer les données d'entrées vers les blocs de traitements 12 mais également les données calculées par les blocs de traitement 12 vers un utilisateur de l'architecture de traitement.

De préférence, il est utilisée également une brique de services génériques 19 (que les briques élémentaires 10 partagent) sous réserve d'assurer la protection des données transmises via un sous-bloc de protection locale 22 qui garantit ainsi un cloisonnement par le chiffre de ces données avant traitement par la brique de services génériques. Dans ce cas, il convient également d'assurer l'acheminement de chaque donnée depuis des interfaces externes non représentées sur la figure 1 et entre les briques élémentaires 10 et la brique de services génériques 19 vers les blocs de traitement 12 appropriés. Pour cela, il est proposé d'utiliser également les aiguilleurs 20 propres à acheminer les données vers les élémentaires 10 et la brique de services génériques 19.

Pour obtenir une telle architecture 10, il est proposé de mettre en œuvre un procédé de conception d'architecture de traitement 10, par exemple comme le procédé illustré par la figure 2.

Le procédé comporte une étape 100 de détermination des différents sous-ensembles d'opérations ayant deux propriétés cumulatives.

D'une part, les opérations des sous-ensembles d'opérations sont appliquées sur des données requérant un niveau de protection supérieur à un seuil donné. Pourvu qu'un seuil suffisamment élevé soit choisi, cela permet de ne sélectionner que les opérations manipulant des données considérées comme sensibles pour l'application visée. Cela permet de n'appliquer l'étape 100 de détermination qu'aux données sensibles, la détermination étant mise en œuvre de manière automatisée.

D'autre part, les sous-ensembles portent sur des opérations réalisables en parallèles. Cela permet d'accélérer le calcul des différentes opérations par l'architecture de traitement à concevoir.

Le procédé de conception comporte également une étape 102 de détermination pour chaque sous-ensemble d'opérations du niveau de protection le plus élevé requis par les données sur lesquelles les opérations du sous-ensemble sont effectuées.

Par exemple, si un sous-ensemble comporte trois opérations successives effectuées respectivement sur une donnée requérant une protection de niveau de deux, une donnée requérant une protection de niveau de trois et une donnée requérant une protection de niveau de cinq, le niveau de protection le plus élevé déterminé est le niveau de protection de cinq.

Le procédé de conception comporte alors une étape 104 de génération pour chaque sous-ensemble d'opérations d'un bloc de traitement 12 dans l'architecture 10 de traitement à concevoir.

Chaque bloc de traitement 12 comporte une entrée et une sortie et est ainsi propre à effectuer des opérations sur les données en entrée pour obtenir des données en sortie.

Pour cela, chaque bloc de traitement 12 comporte un sous-bloc de calcul 21 et un sous-bloc de protection locale 22, ces deux sous-blocs 21, 22 pouvant être confondus selon l'architecture 10 souhaitée.

Plus spécifiquement, chaque sous-bloc de calcul 21 est dédié à l'exécution des opérations du sous-ensemble pour lequel le bloc de traitement 12 est généré. Cela signifie qu'en fonctionnement, le sous-bloc de calcul 21 est propre à effectuer uniquement les opérations du sous-ensemble de traitement pour lequel le bloc de traitement 12 est généré. Toutefois, ainsi qu'indiqué précédemment, dans certains modes de réalisations, en fonctionnement, le sous-bloc de calcul 21 n'effectue que certaines des opérations du sous-ensemble de traitement pour lequel le bloc de traitement 12 est généré.

En outre, chaque sous-bloc de protection 21 est propre à protéger des données dont le niveau de protection dépend du niveau de protection déterminé pour le sous-ensemble d'opérations considérées. Pour la suite de la description, le niveau de protection du bloc de traitement désigne le niveau de protection des données que le sous-bloc de protection et donc le bloc de traitement est propre à protéger.

A tire d'exemple, la dépendance entre le niveau de protection du bloc de traitement et le niveau de protection maximal déterminé est une relation linéaire.

Ainsi, selon un mode de réalisation, pour deux sous-ensembles d'opérations dont le niveau de protection maximal est respectivement deux et cinq, les niveaux de protection des blocs de traitement générés sont, par exemple, trois et six. Cette règle de dépendance permet d'adapter le niveau de protection du bloc de traitement au niveau maximal tout en prévoyant une marge de protection, garantissant un bon niveau de protection. En outre, l'architecture 10 de traitement conçue permet de traiter chaque donnée avec le niveau de protection requis.

Selon un autre mode de réalisation, la dépendance est une égalité. Pour l'exemple précédent dans lequel pour deux sous-ensembles d'opérations dont le niveau de protection maximal est deux et cinq, les niveaux de protection des blocs de traitement 12 fournis sont alors de deux et cinq. Cela permet de dimensionner la protection des blocs de traitement 12 au plus juste par rapport aux données traitées. Dans ce mode de réalisation également, l'architecture 10 de traitement conçue permet également de traiter chaque donnée avec le niveau de protection requis.

A l'issue de l'étape 104 de génération des blocs de traitement, chaque brique élémentaire 10 est connue. Il convient alors d'étudier la manière d'assembler les blocs de traitements pour former l'architecture de traitement. De préférence, pour cela, ainsi qu'expliqué pour le cas particulier de la figure 1, il convient alors de relier les blocs de traitements à l'aide d'aiguilleurs et de mutualiser les opérations non effectuées par les briques élémentaires 10. Les opérations non effectuées sont usuellement des opérations moins critiques du point de vue de la sécurité.

Le procédé de conception comprend également une étape 106 de détermination des opérations à effectuer sur des données dont le niveau de protection est inférieur au niveau de protection seuil. Les données dont le niveau de protection est inférieur au niveau de protection seuil sont considérées comme des données désensibilisées. De ce fait, les opérations déterminées à l'étape sensible de détermination sont des opérations dites non sécurisées.

De manière optionnelle, le procédé de conception comporte, lorsque les opérations non sécurisées sont redondantes une étape 108 de détermination parmi les opérations effectuées sur des données dont le niveau de protection est inférieur au niveau de protection seuil des opérations de même nature.

Cette étape de détermination 108 est suivie d'une étape 110 d'élimination des opérations non sécurisées redondantes. Des opérations non sécurisées sont redondantes si elles effectuent la même opération sur les données identiques ou différentes. Par exemple, si une première opération consiste à additionner vingt et trente et une deuxième opération à additionner trente et quarante, seule une opération non sécurisée d'additions des deux nombres est conservée. Cela permet de mutualiser les opérations non effectuées par les briques élémentaires 10 et de définir la brique de services génériques 19 présentée à la figure 1.

Le procédé de conception comprend alors une étape 112 de génération pour chacune des opérations déterminées à l'étape de détermination 106, d'une unité de traitement des opérations déterminées, l'unité de traitement étant distincte de chacun des blocs de traitement généré à l'étape 104.

Dans le cas où les opérations redondantes ont été éliminées, cela permet de diminuer le nombre d'unités de traitement tout en conservant la même précision dans les calculs.

Le procédé comporte également une étape 114 de détermination des données en entrée des blocs de traitement 12 et des unités de traitement dont proviennent les données déterminées. De même, le procédé comprend aussi la détermination des données en sortie des blocs de traitement 12 et des unités de traitement utilisant les données issues des blocs.

Le procédé comporte aussi une étape 116 de génération d'au moins un premier aiguilleur 20 propre à acheminer vers chaque bloc de traitement 12 les données à traiter et d'au moins un deuxième aiguilleur 20 propre à acheminer les données traitées vers le ou les unités de traitement.

Plus précisément, l'au moins un premier aiguilleur 20 est propre à acheminer les données déterminées vers l'entrée des blocs de traitement 12 appropriée tandis que l'au moins un deuxième aiguilleur 20 est propre à acheminer les données déterminées obtenues en sortie des blocs de traitement 12 vers la ou les unités de traitement appropriée(s).

Le procédé comporte enfin une étape 118 de génération de l'architecture 10 de traitement complète reprenant les blocs de traitement 12, les unités de traitement, les aiguilleurs 20 et ajoutant le cas échéant des liens entre ces différents éléments.

Cela permet d'obtenir une architecture 10 de traitement présentant un niveau de protection adapté aux données traitées en particulier. Ainsi, contrairement à l'état de la technique dans lequel le niveau de protection de chacune des opérations à effectuer par l'architecture de traitement est celui de la donnée ayant un niveau de protection maximal, le niveau de protection de chacune des opérations à effectuer est adapté au niveau de protection des données traitées. Cela permet de diminuer les contraintes de sécurité appliquées à certaines des opérations.

En outre, une telle architecture 10 de traitement est mise en œuvre de manière reconfigurable, de sorte qu'il est possible de mettre en œuvre le procédé pour optimiser des architectures de traitement existantes.

De plus, ce procédé s'applique à différents types de supports. Ainsi, selon les cas, l'architecture conçue est mise en œuvre à l'aide d'un FPGA, d'une architecture programmable ou des ASIC.

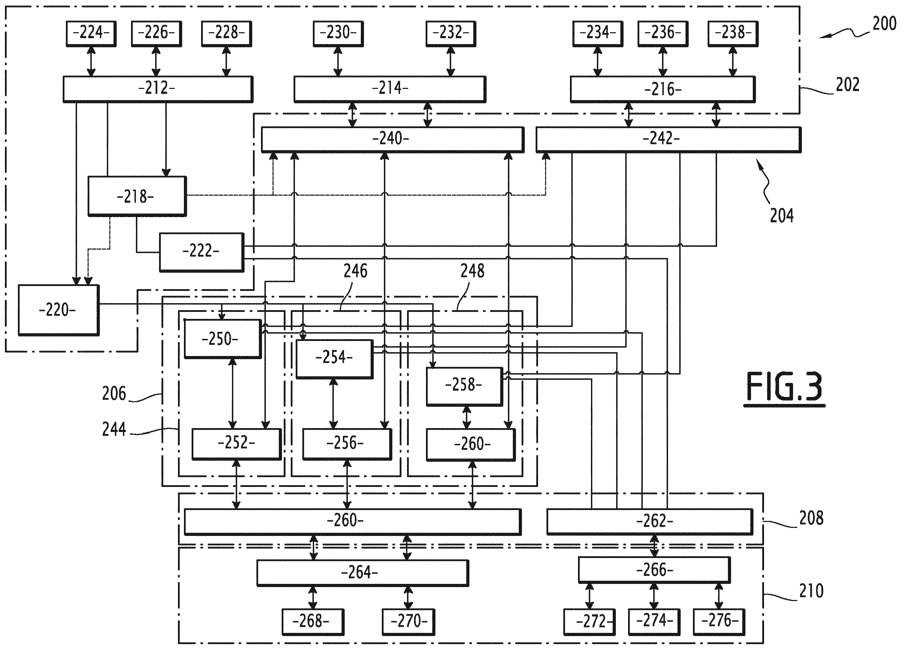

La figure 3 illustre un exemple d'architecture de traitement 200 obtenue à l'aide du procédé de conception. L'architecture de traitement 200 est propre à effectuer des opérations sur un flux de données. Les opérations permettent de convertir des données sensibles en données non sensibles et l'inverse tandis que d'autres opérations sont appliquées sur des données sensibles pour obtenir d'autres données sensibles et d'autres opérations sur des données non sensibles pour obtenir d'autres données non sensibles. Par exemple, des opérations de chiffrement et de déchiffrement sont utilisées. Pour la suite de la description, une couleur est associée aux données en fonction de leur caractère sensible vis-à-vis de la sécurité de l'architecture de traitement 200. Les données rouges sont les données dites sensibles comme des clefs, des mots de passes ou des numéros de compte tandis que les données noires sont les données non sensibles. Autrement formulé, cela signifie que le niveau de protection requis par les données rouges est strictement supérieur au niveau de protection requis par les données noires.

L'architecture de traitement 200 comporte un ensemble d'interfaces utilisateur pour les données rouges 202, un premier étage d'aiguilleurs 204, un ensemble de blocs de traitement 206, un deuxième étage d'aiguilleurs 208 et un ensemble d'interfaces utilisateur pour les données noires 210.

L'ensemble d'interfaces utilisateur pour les données rouges 202 permet l'accès aux services en coupure ou en ressource accessibles aux données rouges.

L'ensemble d'interfaces utilisateur pour des données rouges 202 comporte une unité de traitement de service externe d'administration 212, une unité de traitement des services externes en coupure ou en ressource 214, une unité de traitement des services externes d'injection locale 216, une unité d'administration générale 218, une unité de traitement de l'effacement d'urgence 220 et une unité de protection locale d'administration 222.

L'unité de traitement des services externes d'administration 212 permet l'accès à des services d'administration.

Dans le cas de la figure 3, les services d'administration accessibles à l'unité de traitement des services externes d'administration 212 sont l'effacement d'urgence, l'accès à une interface homme-machine (souvent désignée sous l'acronyme IHM) et l'authentification. Pour cela, l'unité de traitement des services externes d'administration 212 est en interaction avec une sous-unité IHM 224 propre à fournir une interface homme-machine, une sous-unité d'effacement d'urgence 226 propre à procéder à un effacement d'urgence et une sous-unité d'authentification 228 propre à obtenir une authentification de la personne. Chacune de ces interactions est montrée par une double flèche sur la figure 3.

Par ailleurs, l'unité de services externes d'administration 212 est également en lien avec l'unité d'administration générale 218 et l'unité de traitement de l'effacement d'urgence 222.

L'unité de traitement des services externes en coupure ou en ressource 214 permet l'accès aux services en coupure via une sous-unité de service en coupure 230 (insertion de données externes) et une sous-unité de service en ressource 232 (requête de données vers un serveur) avec lesquelles l'unité de traitement des services externes en coupure ou en ressource 214 est propre à interagir. Cette capacité d'interaction est montrée par des doubles flèches sur la figure 3.

L'unité de traitement des services externes d'injection locale 216 permet le chargement de données cryptographiques directement vers un ensemble 206 de bloc de traitement. Les données cryptographiques sont issues de plusieurs sous-unités. Ainsi, l'unité de traitement des services externes d'injection locale 216 est en interaction avec une sous-unité de cryptographie 234, une sous-unité d'insertion de données rouges 236 et une sous-unité d'insertion de données noires 238. Chacune de ces interactions est montrée par une double flèche sur la figure 3. La sous-unité de cryptographie 234 permet de convertir des données noires en données rouges.

De manière générale l'unité d'administration générale 218 permet d'assurer la configuration statique ou dynamique des étages d'aiguilleurs 204, 208 et permet le démarrage des différentes interfaces et interconnexions de l'architecture de traitement 200.

Plus précisément, dans le cas particulier de la figure 3, l'unité d'administration générale 218 est en interaction avec une unité de traitement des services externes d'administration 212 ainsi que mentionné précédemment. En outre, l'unité d'administration générale 218 est également en interaction avec l'unité de traitement de protection locale administrative 222 et l'unité de traitement de gestion de l'effacement d'urgence 220.

L'unité de traitement de l'effacement d'urgence 220 est propre à garantir l'effacement des données rouges sur commande de l'unité d'administration générale 218. Les conditions amenant à l'effacement des données sont fonction de la politique d'effacement définie pour la conception de l'architecture 200.

L'unité de traitement de protection locale administrative 222 assure la protection de l'unité d'administration générale 218.

Le premier étage d'aiguillage 204 est propre à amener des données depuis l'ensemble d'interfaces utilisateur pour des données rouges 202 vers le bloc de traitement 206 ou des données rouges obtenues après traitement du bloc de traitement 206 vers l'ensemble d'interfaces utilisateur pour des données rouges 202.

Le premier étage d'aiguillage 204 comporte deux aiguilleurs 240 et 242, le premier aiguilleur 240 assurant la reconfiguration statique et dynamique pour toutes les données rouges et le deuxième aiguilleur 242 assurant la reconfiguration statique et dynamique des services d'administration local. De ce fait, le premier aiguilleur 240 est notamment en interaction avec l'unité de traitement des services externes en coupure ou en ressource 214 alors que le deuxième aiguilleur 242 est en interaction avec l'unité de traitement des services externes d'injection locale 216.

Le bloc de traitement 206 comporte trois blocs de traitement 244, 246, 248.

Le premier bloc de traitement 244 comporte un sous-bloc de protection locale 250 en interaction avec un sous-bloc de traitement de données sensibles 252.

Le deuxième bloc de traitement 246 comporte un sous-bloc de protection locale 254 en interaction avec un sous-bloc de traitement de données sensibles 256.

Le troisième bloc de traitement 248 comporte un sous-bloc de protection locale 258 en interaction avec un sous-bloc de traitement de données sensibles 260.

Chaque sous-bloc de traitement de données sensibles 252, 256 et 260 est propre à effectuer des opérations sur des données. Par exemple, les opérations sont des opérations cryptographiques, des opérations de filtrages ou des opérations associées à des services. A titre d'illustration, les services permettent de récupérer des messages de gestion, de fournir une heure de confiance pour les données calculées ou de mémoriser des données particulières.

Chacun des blocs de traitement 244, 246 et 248 a un niveau de protection différent. Par exemple, le niveau de protection du premier bloc de traitement 244 est le niveau de protection de trois, le niveau de protection du deuxième bloc de traitement 246 est le niveau de quatre et le niveau de protection du troisième bloc est le niveau de protection de cinq.

Chaque sous-bloc de protection locale 250, 254 et 258 est propre à la protection des données traitées par le bloc de traitement 244, 246 et 248 auquel il est associé. A titre d'exemple, les services sont la mémorisation des clés de protection locale ou le déchiffrement et la vérification de l'authenticité et de l'intégrité des données utilisées dans le bloc de traitement 244, 246 et 248 considéré.

Le deuxième étage d'aiguillage 208 est propre à amener des données depuis l'ensemble d'interfaces utilisateur pour des données noires 210 vers le bloc de traitement 206 ou des données noires obtenues après traitement du bloc de traitement 206 vers l'ensemble d'interfaces utilisateur pour des données rouges 202. Pour cela, dans le cas particulier de la figure 3, le deuxième étage d'aiguillage 208 comporte deux aiguilleurs 260 et 262.

L'ensemble d'interfaces utilisateur pour des données noires 210 permet l'accès aux services en coupure ou en ressource accessibles aux données noires.

Dans le cas particulier de la figure 3, l'ensemble d'interfaces utilisateur pour des données noires 210 comporte une unité de traitement des données noires en ressource ou en coupure 264 et une unité de traitement des services communs externes 266.

L'unité de traitement des services externes en coupure ou en ressource 264 permet l'accès aux services en coupure via une sous-unité de service en coupure 268 (insertion de données externes) et une sous-unité de service en ressource 270 (requête de données vers un serveur) avec lesquelles l'unité de traitement des services externes en coupure ou en ressource 264 est propre à interagir. Cette capacité d'interaction est montrée par des doubles flèches sur la figure 3.

L'unité de traitement des services communs externes 266 assure des services externes. Dans le cas présenté, cette unité de traitement des services communs externes 266 est en interaction avec une sous-unité de mémorisation 272, une sous-unité de génération de nombre aléatoire 274 et une sous-unité de communication 276. Ainsi, l'unité de traitement des services communs externes 266 est notamment propre à la mémorisation de données et à la communication entre plusieurs appareils.

En fonctionnement, une telle architecture 200 permet donc de traiter à la fois des données noires et des données rouges. Ces traitements sont optimisés par rapport au niveau de protection à apporter aux différentes données traitées, sachant que l'intégrité des données est malgré tout assurée.

Ainsi, l'architecture 200 assure un cloisonnement des données noires (en clair) des données rouges (chiffrées). L'architecture 200 permet également de séparer les données cryptographies rouges des autres données rouges et noires. En outre, l'architecture 200 assure le cloisonnement entre des données rouges requérant un niveau de protection distinct.

## Revendications

1. Procédé de conception d'une architecture (10, 200) de traitement d'un ensemble d'opérations effectuées sur des données, certaines données requérant un niveau de protection, l'ensemble des opérations effectuées sur des données requérant un niveau de protection supérieur à un niveau de protection seuil comportant au moins deux sous-ensembles d'opérations réalisables en parallèle, **caractérisé en ce que** le procédé comprend une étape de :
- détermination des différents sous-ensembles d'opérations de l'ensemble des opérations, chaque sous-ensemble comprenant des opérations à effectuer sur des données requérant un niveau de protection supérieur à un niveau de protection seuil et chaque sous-ensemble d'opérations étant réalisable en parallèle des autres sous-ensembles d'opérations,
- détermination, pour chaque sous-ensemble d'opérations, du niveau de protection le plus élevé requis par les données sur lesquelles les opérations du sous-ensemble sont effectuées, et
- génération, pour chaque sous-ensemble d'opérations, d'un bloc de traitement (12, 206) dans l'architecture (10, 200) de traitement à concevoir, le bloc de traitement (12, 206) comprenant un sous-bloc de calcul (21, 244, 246, 248) dédié uniquement à l'exécution des opérations du sous-ensemble sur des données à traiter par le bloc de traitement (12, 206) dont le niveau de protection dépend du niveau de protection déterminé pour le sous-ensemble d'opérations considéré et un sous-bloc de protection (22, 250 , 254, 258) propre à assurer la protection des données à traiter par le bloc de traitement (12, 206), et
- génération d'au moins un aiguilleur (20, 204) propre à acheminer, vers chaque bloc de traitement (12, 206), les données à traiter,
dans lequel le procédé est **caractérisé par** les étapes de :
- détermination des opérations à effectuer sur des données dont le niveau de protection est inférieur au niveau de protection seuil, et
- génération, pour chacune des opérations déterminées, d'une unité de traitement de l'opération, les unités de traitement étant distinctes des blocs de traitement (12, 206),
- détermination parmi les opérations effectuées sur des données dont le niveau de protection est inférieur au niveau de protection seuil, des opérations redondantes, et
- élimination pour les opérations redondantes déterminées, d'une des deux opérations redondantes.

2. Procédé selon la revendication 1, dans lequel chaque bloc de traitement (12, 206) est propre à protéger des données dont le niveau de protection est égal au niveau de protection déterminé pour le sous-ensemble d'opérations pour lequel le bloc de traitement (12, 206) est généré.

3. Procédé selon la revendication 1, dans lequel le procédé comprend, en outre, une étape de détermination des données à traiter par le bloc de traitement (12, 206) provenant d'une unité de traitement (12).

4. Procédé selon l'une quelconque des revendications 1 à 3, dans lequel chaque sous-bloc de calcul (21, 244, 246, 248) est propre à obtenir des données traitées par exécution des opérations du sous-ensemble sur les données à traiter par le bloc de traitement (12, 206), le procédé comprenant, en outre, une étape de :
- détermination des données à acheminer vers une ou plusieurs unités de traitement parmi les données traitées par chaque sous-bloc de calcul (21, 244, 246, 248), et
- génération d'au moins un aiguilleur (20) des données propre à acheminer les données déterminées vers le ou les unités de traitement (12).

5. Procédé selon l'une quelconque des revendications 1 à 4, dans lequel le procédé est mis en œuvre par ordinateur.

6. Produit programme d'ordinateur comportant des instructions de code de programmation aptes à être mises en œuvre par un processeur, le processeur étant apte à mettre en œuvre le procédé selon l'une quelconque des revendications 1 à 5.

7. Architecture de traitement (10, 200) obtenue par la mise en œuvre du procédé selon l'une quelconque des revendications 1 à 5.

## Patentansprüche

1. Verfahren zum Entwerfen einer Architektur (10, 200) zum Verarbeiten einer Menge von Operationen, die auf Daten ausgeführt werden, wobei einige Daten ein Schutzniveau erfordern, wobei die Menge von Operationen, die auf Daten ausgeführt werden, eine Schutzniveau größer als ein Schwellwertschutzniveau erfordert, das mindestens zwei Teilmengen von Operationen aufweist, die parallel implementierbar sind, **dadurch gekennzeichnet, dass** das Verfahren einen Schritt aufweist der:
- Bestimmung der unterschiedlichen Teilmengen von Operationen der Menge von Operationen, wobei jede Teilmenge Operationen aufweist, die auf Daten ausgeführt werden sollen, die ein Schutzniveau erfordern, das größer als ein Schwellenschutzniveau ist, und wobei jede Teilmenge von Operationen parallel mit den anderen Teilmengen von Operationen implementierbar ist,
- Bestimmung für jede Teilmenge von Operationen des höchsten Schutzniveaus, das von den Daten benötigt wird, auf denen die Operationen der Teilmenge ausgeführt werden, und
- Erzeugung eines Verarbeitungsblocks (12, 206) für jede Teilmenge von Operationen in der zu entwerfenden Verarbeitungsarchitektur (10, 200), wobei der Verarbeitungsblock (12, 206) einen Berechnungsunterblock (21, 244, 246, 248), der ausschließlich der Ausführung der Operationen der Teilmenge auf Daten gewidmet ist, die von dem Verarbeitungsblock (12, 206) verarbeitet werden sollen, dessen Schutzniveau von dem für die betrachtete Untergruppe von Operationen bestimmten Schutzniveau abhängt, und einen Schutzunterblock (22, 250, 254, 258) aufweist, der zum Gewährleisten des Schutzes der vom Verarbeitungsblock (12, 206) zu verarbeitenden Daten geeignet ist, und
- Erzeugung mindestens eines Routers (20, 204), der in der Lage ist, die zu verarbeitenden Daten zu jedem Verarbeitungsblock (12, 206) zu übertragen,
in dem das Verfahren charakterisiert ist durch die Schritte der:
- Bestimmung der Operationen, die auf Daten auszuführen sind, deren Schutzniveau unter dem Schwellenschutzniveau liegt, und
- Erzeugung, für jede der bestimmten Operationen, einer Verarbeitungseinheit der Operation, wobei sich die Verarbeitungseinheiten von den Verarbeitungsblöcken (12, 206) unterscheiden,
- Bestimmung unter den Operationen, die auf Daten ausgeführt werden, deren Schutzniveau unter dem Schwellenschutzniveau liegt, redundanter Operationen und
- Beseitigung für die bestimmten redundanten Operationen, eine der beiden redundanten Operationen.

2. Verfahren nach Anspruch 1, wobei jeder Verarbeitungsblock (12, 206) geeignet ist, Daten zu schützen, deren Schutzniveau gleich dem Schutzniveau ist, das für die Teilmenge von Operationen bestimmt wurde, für die der Verarbeitungsblock (12, 206) erzeugt wird.

3. Verfahren nach Anspruch 1, wobei das Verfahren ferner einen Schritt zum Bestimmen der von dem Verarbeitungsblock (12, 206) zu verarbeitenden Daten, der von einer Verarbeitungseinheit (12) stammt, aufweist.

4. Verfahren nach einem der Ansprüche 1 bis 3, wobei jeder Berechnungsunterblock (21, 244, 246, 248) angepasst ist, um Daten zu erhalten, die durch Ausführen von Operationen der Untermenge auf den zu verarbeitenden Daten durch den Verarbeitungsblock (12, 206) verarbeitet wurden, wobei das Verfahren ferner einen Schritt aufweist der:
- Bestimmung der Daten, die an eine oder mehrere Verarbeitungseinheiten weitergeleitet werden sollen, unter den Daten, die von jedem Berechnungsunterblock (21, 244, 246, 248)) verarbeitet werden, und
- Erzeugung mindestens eines Datenrouters (20) zum Übermitteln der ermittelten Daten an die Verarbeitungseinheit oder die Verarbeitungseinheiten (12).

5. Verfahren nach einem der Ansprüche 1 bis 4, wobei das Verfahren computerimplementiert ist.

6. Computerprogrammprodukt mit Programmiercodeanweisungen, die zur Ausführung durch einen Prozessor geeignet sind, wobei der Prozessor geeignet ist, das Verfahren nach einem der Ansprüche 1 bis 5 durchzuführen.

7. Verarbeitungsarchitektur (10, 200) erhalten durch Ausführen des Verfahrens nach einem der Ansprüche 1 bis 5.

## Claims

1. Method for designing a processing architecture (10, 200) for a set of operations performed on data, some data requiring a level of protection, the set of operations performed on data requiring a level of protection greater than a threshold level of protection comprising at least two sub-sets of operations which are capable of being carried out in parallel, **characterised in that** the method comprises a step of:
- determining the different sub-sets of operations of the set of operations, each sub-set comprising operations to be performed on data requiring a level of protection greater than a threshold level of protection and each sub-set of operations being capable of being carried out in parallel with the other sub-sets of operations,
- determining, for each sub-set of operations, the highest level of protection required by the data on which the operations of the sub-set are performed, and
- generating, for each sub-set of operations, a processing block (12, 206) in the processing architecture (10, 200) to be designed, the processing block (12, 206) comprising a computation sub-block (21, 244, 246, 248) dedicated solely to the execution of the operations of the sub-set on data to be processed by the processing block (12, 206) whose level of protection depends on the level of protection determined for the sub-set of operations in question, and a protection sub-block (22, 250, 254, 258) capable of protecting the data to be processed by the processing block (12, 206), and
- generating at least one switch (20, 204) capable of routing the data to be processed to each processing block (12, 206),
wherein the method is further **characterised by** the steps of:
- determining the operations to be performed on data whose level of protection is lower than the threshold level of protection, and
- generating, for each of the determined operations, a processing unit for the operation, the processing units being separate from the processing blocks (12, 206),
- determining, from among the operations performed on data whose level of protection is lower than the threshold level of protection, redundant operations, and
- eliminating, for the determined redundant operations, one of the two redundant operations.

2. Method according to claim 1, wherein each processing block (12, 206) is capable of protecting data whose level of protection is equal to the level of protection determined for the sub-set of operations for which the processing block (12, 206) is generated.

3. Method according to claim 1, wherein the method further comprises a step of determining the data to be processed by the processing block (12, 206) derived from a processing unit (12).

4. Method according to any one of claims 1 to 3, wherein each computation sub-block (21, 244, 246, 248) is capable of obtaining processed data by execution of the operations of the sub-set on the data to be processed by the processing block (12, 206), the method further comprising a step of:
- determining the data to be routed to one or more processing units from among the data processed by each computation sub-block (21, 244, 246, 248), and
- generating at least one switch (20) of the data, capable of routing the determined data to the processing unit(s) (12).

5. Method according to any one of claims 1 to 4, wherein the method is carried out by a computer.

6. Computer program product comprising programming code instructions capable of being carried out by a processor, the processor being capable of carrying out the method according to any one of claims 1 to 5.

7. Processing architecture (10, 200) obtained by carrying out the method according to any one of claims 1 to 5.
